# EUROPEAN PATENT APPLICATION

(11) **EP 1 707 485 A1**
(43) Date of publication of application: **04.10.2006**
(21) Application number: 05710991.0
(22) Date of filing: 11.01.2005
(51) Int. Cl.: B64C 11/48, B64C 11/18

(54) **PROPELLER**

(30) Priority: 20.01.2004 RU 2004101034
(71) Applicant: Obschestvo s Ogranichennoi Otvetstvennostyu Midera-k, Moscow, 123053 (RU)
(72) Inventor: AKARO, Andrey Igorevich, Moscow, 105037 (RU); ZELINSKY, Anatoly Mikhailovich, St.Petersburg, 197374 (RU); MEDVEDEV, Mikhail Mikhailovich, Moskovskaya obl., 140186 (RU)
(74) Representative: Hano, Christian
(86) International application number: PCT/RU2005/000004
(87) International publication number: WO 2005/068292

(57) **Abstract**

A propeller has a shaft 1 with at least two hubs 2 arranged on it, with blades 3 fixed on each of the hubs. Each blade 3 has sharp front and rear edges and configured along an extension of the blades with a maximum thickness of profiles (0.10-0.25)b, wherein b is a length of a local chord of the blade 3. In each of the blades 3 a maximum thickness 6 of the profile is located in a middle of each local chord and twisted relative to an axis 8, extending through a middle of local chords along the extension of the blade 3. The blades 3 can be fixed on each of the hubs 2 inclinedly to a radius of the hub 2 at an angle < 90º, which leads to a reduction of local aerodynamic resistance and reduction of aerodynamic loads. The propeller can be provided with an immovable cylindrical casing, surrounding all the blades 3 and moved out forwardly of the blades of the front hub 2 not less than by a length of the blade, which increases a value of a torque.

## Description

### Technical Field

The invention relates to air screws, which can be used in the area of aviation and special transportation (Propeller-sleighs, air-support vessels).

### Prior Art

A propeller is known, which has a shaft with two hubs installed on it, with blades which are fixed on each of the hubs uniformly over a circumference. The blades on the two hubs are driven in rotation in opposite directions by means of an motor (U.S. patent no. 2,953,320 U.S.Cl. :244-12, 1960).

A propeller is known, which has a shaft with two hubs installed on it, with blades fixed on each of the hubs uniformly over a circumference. The blades of the two hubs are driven in rotation in opposite directions by means of a motor (RU patent no. 2,062,246, IPC:B 64 C29/00, 1996).

The disadvantage of both known propellers is that each design of the propeller generates high aerodynamic loads which act on it, that leads to a necessity to provide its high strength and stiffness.

### Summary of the Invention

A task which is solved in this invention is to create a propeller which provides a reduction of aerodynamic loads acting on it.

This task during the creation of propeller is achieved in that, in the propeller which has a shaft with hubs installed on it with blades fixed on each of the hubs uniformly over a circumference, according to the invention, on a shaft are installed, at least, two hubs with blades fixed on each of the hubs uniformly over a circumference, each blade has sharp front and rear edges, and is formed along an extension of a blade with a maximum thickness of profiles (0.10-0.25)b, where b is a length of a local chord of the blade and twisted relative to an axis extending through a middle of the iocai chords along the extension of the blade, wherein the maximum thickness of the profile is located in a middle of each local chord.

The arrangement of at least two hubs with blades fixed on each of them uniformly over a circumference leads to a reduction of sizes of the hubs with the blades, which leads to a reduction of aerodynamic loads acting on the propeller.

The sharp front and rear edges of each blade together provide a reduction of aerodynamic resistance of the blades and as a result a reduction of aerodynamic loads acting on the propeller.

The configuration along an extension of each blade with the maximum thickness of the profiles (0.10-0.25)b, wherein b is a length of local chord of the blade, provides within a selected range of the maximum thickness of the profiles, a reduction of aerodynamic resistance of the blades and as a result a reduction of aerodynamic loads acting on the propeller.

The maximum thickness of the profile of each blade, located in the middle of each local chord, provides a uniform distribution of aerodynamic loads along the length of the chord (width of the blade), which reduces aerodynamic loads acting on the propeller.

Twisting of each blade relative to an axis, extending through the middle of the local chords along the extension of the blade, provides a reduction of dispersion of aerodynamic loads along the length of the blade, which reduces aerodynamic loads acting on the propeller.

Fixing of the blades on each of the hubs inclinedly to radius of the hub at an angle < 90 degrees leads to the fact that an angle between an axis of the blade and a local speed of movement of the blade along a height becomes different from a right angle, which leads to a reduction of a local aerodynamic resistance of the blade and, therefore, reduces aerodynamic loads acting on the propeller.
Fixing of blades on each of hubs at an angle more than 90 degrees is impossible because of impossibility of penetration of blades into the body of the hub.

Provision of the propeller with an immovable cylindrical casing surrounding all blades and moved out forwardly of the blades of the front hub not less than by a length of the blade allows to increase a value of a torque. During the rotation the propeller throws air in a direction of rotation and forwardly against movement of the propeller. The thrown off air is reflected by the casing so that the running-on flow becomes twisted in a direction of their rotation, which increases a torque and thereby efficiency of the propeller. Due to the reflection of this air the maximum twist of the running-on flow is obtained with a cylindrical casing. A length of the casing is determined by a distance, over which a speed of the reflected air is close to zero. With optimal parameters of the blades and a speed of rotation of the propeller it becomes close to a radius of the propeller and therefore to a length of the blade.

### Brief Description of the Drawings

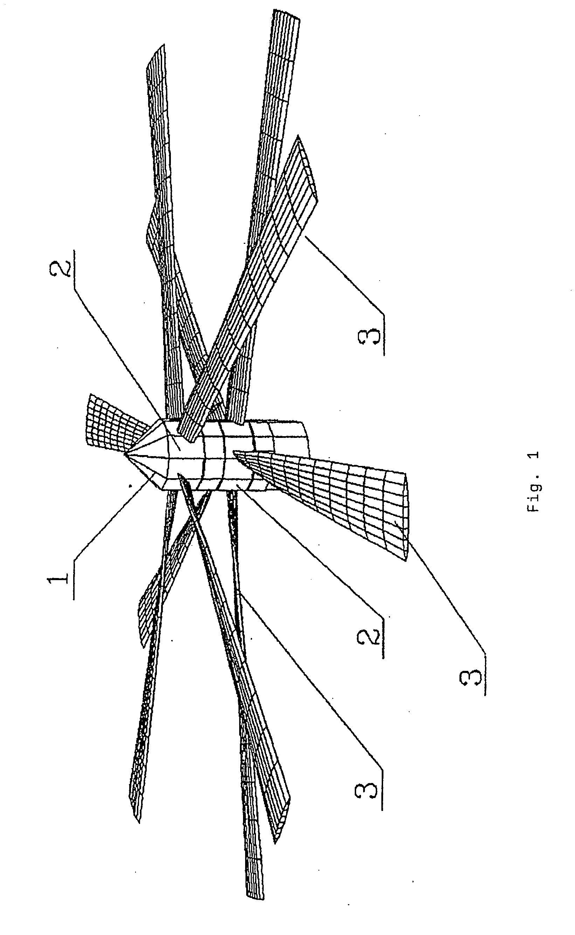

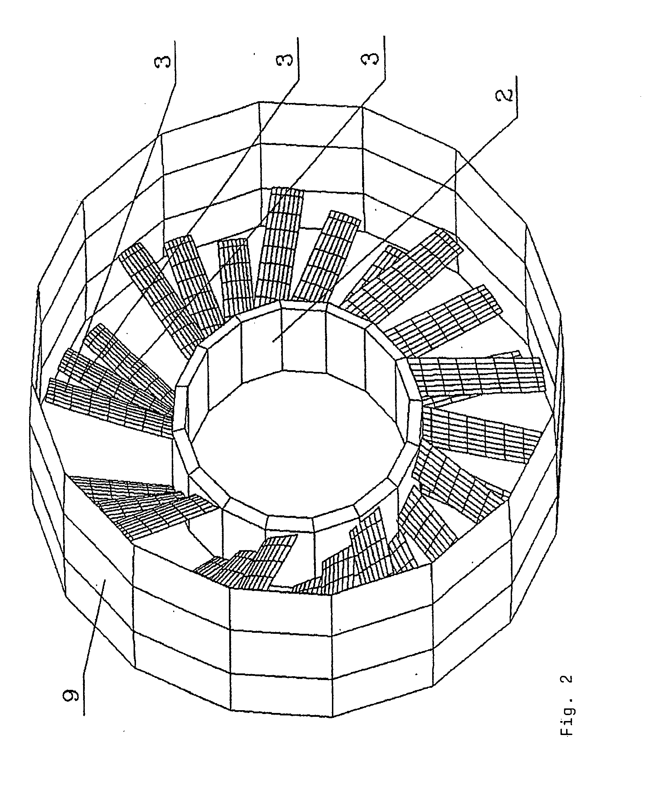

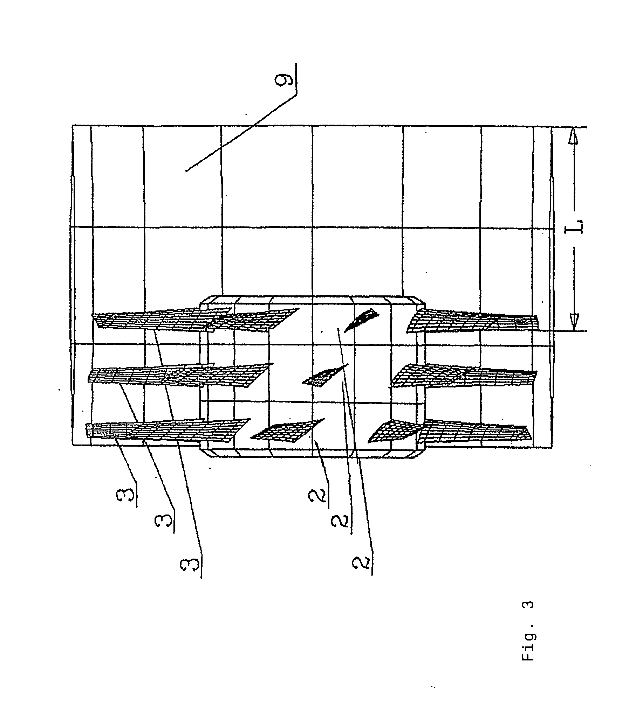

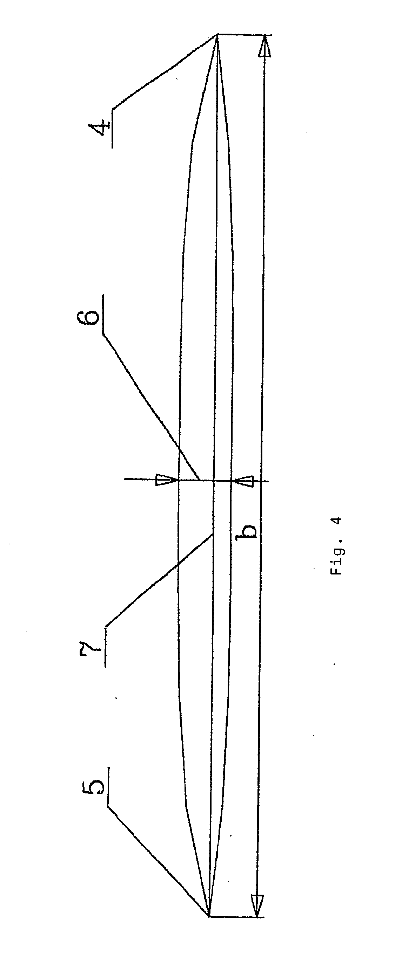

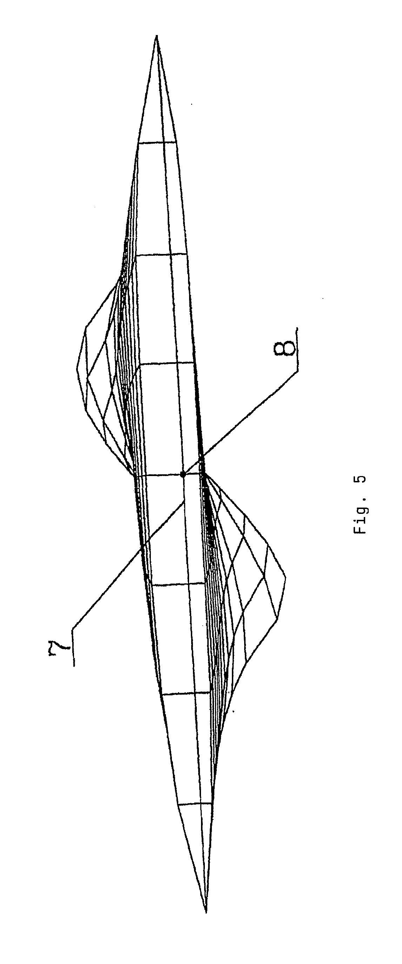

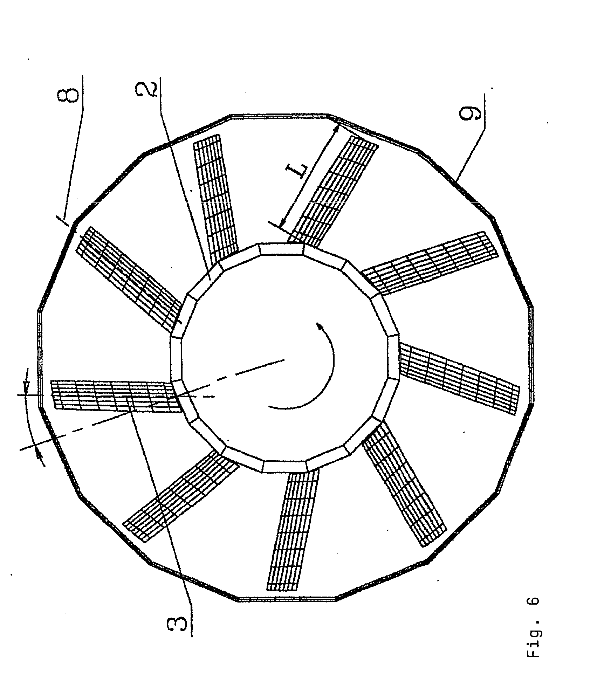

Figure 1 shows a general view of a propeller; Figure 2-is a general view of the propeller with a casing; Figure 3-is a side view of the propeller with the casing; Figure 4-is a transverse cross-section of the blade; Figure 5-is a view of a twisted blade from an end; Figure 6-is a view of the propeller from the front with fixed blades inclined.

### Best Mode of Implementation of Invention

A propeller has a shaft 1 with at least two hubs 2 arranged on it with blades 3 fixed on each of the hubs uniformly over a circumference. A number of the hubs with the blades 3 can be different. The blades 3 on each subsequent hub 2 can be fixed both with a possibility of rotation in opposite direction, and with a possibility of rotation in one direction. The rotation can be performed from a motor by means of a drive shaft and gear trains.

Each blade 3 has a sharp front edge 4 and a sharp rear edge 5, and is configured along an extension of the blade 3 with a maximum thickness of profiles (0.10-0.25)b, wherein b-is a length of a local chord of the blade 3.

In each blade 3 the maximum thickness 6 of the profile is located in a middle of each local chord.

The profiles can have different shapes, for example double-convex, wedge-like, rhombus-like. Along the extension the blades can be composed of profiles of different shapes.

Each blade 3 is twisted relative to an axis 8, extending through a middle of the local chord along the extension of the blade 3.

The blades 3 can be fixed on each of the hubs 2 inclinedly to radius of the hub 2 under a corner < 90 degrees in a direction opposite to the rotation of the propeller, as shown by arrow on Figure 6.

The propeller can be provided with an immovable cylindrical casing 9 which surrounds all blades 3 and is moved out in front of the blades 3 of the front hub 2 not less than by length of the blade L. The hubs 2 with the blades 3 are driven in rotation by the shaft 1 of a motor, to generate aerodynamic forces and movements, which drive a vehicle into movement.

The provision of at least two hubs 2 with the blades 3 fixed on each of them uniformly over a circumference leads to a reduction of the sizes of the hubs 2 with the blades 3 which leads to a reduction of aerodynamic loads on the propeller.

Sharp front and rear edges 4 and 5 of each blade 3 together provide a reduction of aerodynamic resistance of the blades 3 and as a result a reduction of aerodynamic loads acting on the propeller.

The configuration along the extension of each blade 3 with the maximum thickness of the profiles (0.10-0.25)b, wherein b is a length of a local chord of the blade 3, provides within a selected range of the maximum thickness of the profiles a reduction of aerodynamic resistance of the blades 3 and as a result a reduction of aerodynamic loads acting on the propeller.

The maximum thickness 6 of the profile of each blade 3 located in a middle of each local chord 7 provides a uniform distribution of aerodynamic loads along the length of the chord 7 (width of the blade 3), which reduces aerodynamic loads acting on the propeller.

Twisting of each blade 3 relative to the axis 8, extending through the middle of its chord 7 along the extension of the blade 3, provides a reduction of a dispersion of aerodynamic loads along the length of the blade 3, which reduces aerodynamic loads acting on the propeller.

Fixing of the blades 3 on each of the hubs 2 inclinedly to radius of the hub 2 at an angle < 90 degrees leads to the fact that the angle between the axis of the blade 3 and the local speed of movement of the blade 3 along the height becomes different from a right angle, which leads to a reduction of local aerodynamic resistance of the blade 3 and, therefore, reduces the aerodynamic load on the propeller.

Provision of the propeller with the immovable cylindrical casing 10 surrounding all blades 3 and moved out in front of the blades 3 of the front hub 2 not less than by the length L of the blade 3 allows to increase a value of torque during the rotation of the propeller.

### Industrial Applicability

The present invention can be used most successfully in the area of aviation and a special transportation (propeller-sleighs, air-support vessels).

## Claims

1. A propeller, having a shaft with hubs installed on it with blades fixed on each of the hubs uniformly over a circumference, **characterized in that** on a shaft are installed , at least, two hubs with blades fixed on each of the hubs uniformly over a circumference, each blade has sharp front and rear edges and configured along an extension of the blade with a maximum thickness of profiles (0.10-0.25)b, wherein b is a length of a local chord of the blade, and twisted relative to an axis extending through a middle of local chords along the extension of the blade, wherein the maximum thickness of the profile is located in a middle of each local chord.

2. Propeller according to claim 1, **characterized in that** the blades are fixed on each of the hubs inclinedly to radius of the hub at an angle < 90 degrees.

3. Propeller according to claims 1 and 2, **characterized in that** it is provided with an immovable cylindrical casing, surrounding all blades and moved out in front of the blades of a front hub not less than by a length of the blade.

## Amended claims

### Amended claims under Art. 19.1 PCT

**1.** A propeller, having a shaft with at least two hubs installed on it, with blades fixed on each of the hubs uniformly over a circumference, each blade has sharp front and rear edges and configured along a blade span with a maximum thickness of profiles (0.10-0.25)b, wherein b is a length of a local chord of the blade, and each blade is twisted relative to an axis extending through a middle of local chords along the blade span, wherein the maximum thickness of the profile is located in a middle of each local chord.

**2.** Propeller according to claim 1, **characterized in that** the blades are fixed on each of the hubs inclinedly in a direction opposite to rotation.

**3.** Propeller according to claims 1 or 2, **characterized in that** it is provided with an immovable cylindrical casing, surrounding all blades and being moved out in front of the blades of a front hub not less than by a length of the blade.
